# EUROPÄISCHE PATENTANMELDUNG

(11) **EP 1 508 360 A2**
(43) Veröffentlichungstag der Anmeldung: **23.02.2005**
(21) Anmeldenummer: 04013305.0
(22) Anmeldetag: 05.06.2004
(51) Int. Cl.: B01D 53/34

(54) **Verfahren und Anlage zur Kaltwassererzeugung**

(30) Priorität: 18.08.2003 DE 10338410
(71) Anmelder: Donau Carbon GmbH & Co. KG, 60388 Frankfurt am Main (DE)
(72) Erfinder: Reichert, Bernd, Dipl.-Ing., 61194 Niddatal (DE); Röder, Herbert, Dipl.-Ing., 60599 Frankfurt am Main (DE)
(74) Vertreter: KEIL & SCHAAFHAUSEN

(57) **Zusammenfassung**

Die Erfindung betrifft ein Verfahren zur Kaltwassererzeugung unter Nutzung von Desorbatwärme, die bspw. in einer Lösemittelrückgewinnungsanlage (1) anfällt. Hierzu wird in einem Desorbatwärmetauscher (12) ein Heiz- oder Kühlmedium erwärmt und dessen Wärmeenergie in einem Puffersystem (25) gespeichert, aus welchen mittels eines weiteren Heiz- oder Kühlmediums Wärmeenergie bspw. zum Heizen von Räumen abgeführt wird. Die Nutzung von Desorbatwärme zur Kaltwassererzeugung kann dadurch erreicht werden, dass das weitere Heiz- oder Kühlmedium vor der Nutzung seiner Wärmeenergie bspw. zum Heizen von Räumen in einem Temperaturgleichrichter (28) auf ein im Wesentlichen konstantes Temperaturniveau zwischen 85° C und 110° C gebracht und die Wärmeenergie des Heiz- oder Kühlmediums in einer dem Temperaturgleichrichter (28) nachgeschalteten Kaltwassererzeugungsanlage (30) zur Kühlung eines Kühlmediums eingesetzt wird. Weiter betrifft die Erfindung eine Anlage zur Kaltwassererzeugung unter Nutzung von Desorbatwärme.

## Beschreibung

Die Erfindung betrifft ein Verfahren zur Kaltwassererzeugung unter Nutzung von Desorbatwärme, insbesondere aus einer Lösemittelrückgewinnungsanlage, bei dem in einem Desorbatwärmetauscher ein erstes Heiz- oder Kühlmedium (Primärkreislauf) erwärmt und dessen Wärmeenergie in einem Puffersystem gespeichert wird, aus welchem mittels eines weiteren Heiz- oder Kühlmediums (Sekundärkreislauf) Wärmeenergie zur Nutzung abgeführt wird. Weiter betrifft die Erfindung eine entsprechende Anlage.

In den Lösemittel verarbeitenden Industrien dürfen die teilweise toxischen Lösemittel nicht zusammen mit der Abluft an die Umgebung abgegeben werden. So werden bspw. in Druckereien die bei der Trocknung von Farben verdampfenden Lösemittel abgesaugt und über Aktivkohlefilter (Adsorber) gereinigt, bevor die Abluft an die Umgebung abgegeben werden kann. Bei dieser Adsorption von Lösemitteln aus Abluftströmen wird die Aktivkohle beladen, so dass sie in bestimmten Zeitintervallen regeneriert, d.h. gereinigt werden muss.

In dieser Regenerationsphase wird u. a. Wasserdampf durch den Aktivkohlefilter geleitet, wobei sich die Aktivkohle aufheizt. Nach der Aufheizphase tritt aus dem Filter ein als Desorbat bezeichnetes Wasserdampf-Lösemitteldampf-Gemisch aus, welches anschließend kondensiert wird, um das Lösemittel in der flüssigen Phase wieder von dem Wasserdampfkondensat zu trennen. Da diese Systeme drucklos arbeiten, hat die in dem Desorbat enthaltene Wärmeenergie ein Temperaturniveau von maximal 100 °C. Diese Wärmeenergie wird häufig einem Wärmerückgewinnungssystem zugeführt, in welchem bspw. Warmwasser für die Heizung von Räumen oder Gebäuden erzeugt wird.

Da in den Lösemittel verarbeitenden Industrien, wie bspw. Tiefdruckereien, neben Wärmeenergie auch Kaltwasser mit einer Temperatur von etwa 5 bis 6 °C für Kühlzwecke benötigt wird, wurde in der Vergangenheit bereits untersucht, ob die Wärmeenergie aus dem Desorbat direkt für die Kaltwassererzeugung genutzt werden könnte. Diese Überlegungen scheiterten jedoch daran, dass das Desorbat verfahrensbedingt nur diskontinuierlich während den Regenerationsphasen der Aktivkohle anfällt. Eine kontinuierliche Bereitstellung von Wärmeenergie mit einem gleichbleibenden Temperaturniveau von etwa 85 bis 95 °C, die für den Betrieb einer Kältemaschine zur Kaltwassererzeugung erforderlich ist, ist daher durch die in dem Desorbat enthaltene Wärme nicht direkt möglich.

Außerdem sind in dem Desorbat feuergefährliche und/oder explosive Stoffe (Lösemittel) vorhanden, welche spezielle Sicherheitsmaßnahmen bei der Nutzung der Wärmeenergie des Desorbats erfordern. Dadurch ist eine direkte Zuführung des Desorbats in die Kältemaschine ausgeschlossen.

Um die Desorbatwärme zu nutzen, sind Puffersysteme bekannt, in welchen die diskontinuierlich anfallende Desorbatwärme gespeichert wird. Die Puffersysteme sind mit einem Primär- und einem Sekundärkreislauf ausgerüstet. Im Primärkreislauf wird dabei die Wärmeenergie des Desorbats dem Puffer diskontinuierlich zugeführt, während im Sekundärkreislauf die gepufferte Wärmeenergie kontinuierlich abgeführt wird. Trotz dieser Pufferung sind jedoch Temperaturschwankungen nicht zu vermeiden, so dass die Wärmeenergie des Desorbats bisher nur für normale Heizwecke, bspw. für die Heizung von Räumen, bei denen derartige Temperaturschwankungen nicht von Bedeutung sind, genutzt werden kann.

Aufgabe der Erfindung ist es daher, ein Verfahren und eine Anlage der eingangs genannten Art bereitzustellen, mit welchen eine effektivere Nutzung der in dem Desorbat enthaltenen Wärmeenergie kontinuierlich und auf hohem Temperaturniveau möglich ist.

Diese Aufgabe wird erfindungsgemäß im Wesentlichen dadurch gelöst, dass das Heiz- oder Kühlmedium im Sekundärkreislauf vor seiner Nutzung in einem Temperaturgleichrichter auf ein im Wesentlichen konstantes Temperaturniveau zwischen 85 °C und 110 °C gebracht und die Wärmeenergie des Heiz- oder Kühlmediums in einer dem Temperaturgleichrichter nachgeschalteten Kaltwassererzeugungsanlage zur Kühlung eines Kühlmediums eingesetzt wird. Dem Heiz- oder Kühlmedium im Sekundärkreislauf, welches in dem Puffersystem temperiert wurde, wird falls erforderlich weitere Energie in dem Temperaturgleichrichter zugeführt, so dass die Wärmeenergie dieses weiteren Heiz- oder Kühlmediums kontinuierlich und auf einem gleichbleibenden hohen Temperaturniveau anfällt. Somit ist der Betrieb einer Kältemaschine zur Erzeugung von Kaltwasser wirtschaftlich möglich. Die dem Heiz- oder Kühlmedium in dem Temperaturgleichrichter zugeführte Energiemenge ist dabei deutlich kleiner als die zum Betrieb der Kältemaschine erforderliche Energiemenge. Langfristig lassen sich dadurch etwa 50% der Betriebskosten einsparen, so dass sich die höheren Investitionskosten für ein derartiges Verfahren bereits in etwa zwei Jahren amortisieren.

Vorzugsweise wird das weitere Heiz- oder Kühlmedium in dem Temperaturgleichrichter auf ein im Wesentlichen konstantes Temperaturniveau von etwa 95 °C gebracht. Bei dieser Temperatur lässt sich eine Kaltwassererzeugungsanlage mit ausreichendem Wirkungsgrad kontinuierlich betreiben.

Wenn das weitere Heiz- oder Kühlmedium die dem Temperaturgleichrichter nachgeschaltete Kaltwassererzeugungsanlage mit einer Temperatur zwischen 75 °C und 95 °C, insbesondere etwa 85 °C, verlässt, kann diese Wärmeenergie für normale Heizzwecke, bspw. zum Heizen von Räumen, Gebäuden oder dgl., weiter genutzt werden. Auf diese Weise wird der Wirkungsgrad des Verfahrens gesteigert.

Nach einer bevorzugten Ausführungsform der Erfindung wird dem Temperaturgleichrichter Frischdampf zugeführt, der bspw. in einem Kessel erzeugt wird, der gleichzeitig den Frischdampf zur Erzeugung des Desorbats bildet. Eine separate Frischdampfquelle zum Betrieb des Temperaturgleichrichters ist damit häufig nicht notwendig, so dass die Investitionskosten für eine Anlage zur Durchführung des erfindungsgemäßen Verfahrens gering gehalten werden.

Wenn in der dem Temperaturgleichrichter nachgeschalteten Kaltwassererzeugungsanlage das Kühlmedium auf eine Temperatur unter 15 °C, insbesondere auf etwa 4 °C bis 7 °C abgekühlt wird, lässt sich das Kühlmedium, bspw. das Kaltwasser, direkt in der Lösemittelrückgewinnungs-Anlage oder an einer anderen Stelle einer Tiefendruckerei für Kühlzwecke einsetzen. Das erfindungsgemäße Verfahren arbeitet folglich besonders wirtschaftlich, weil der Dampf für den Temperaturgleichrichter aus der Dampfquelle zur Erzeugung des Desorbats bereitgestellt wird und das Kühlmedium unmittelbar in der Anlage, in welcher das Lösemittel anfällt oder zurückgewonnen wird, zur Kühlung genutzt werden kann.

Durch das Puffersystem ist es möglich, auch bei einem zwangsläufig diskontinuierlichen Betrieb des Desorbatwärmetauschers, bei welchem lediglich während der Regenerierungsphasen eines Aktivkohlefilters Desorbatwärme anfällt, kontinuierlich Wärmeenergie mittels des weiteren Heiz- oder Kühlmediums zur Nutzung abzuführen.

Vorzugsweise wird das in der Kaltwassererzeugungsanlage abgekühlte Kühlmedium über einen Kühlkreislauf einer Kühlstufe zugeführt, welche den Adsorbem nachgeschaltet ist. In der Kühlstufe kann Abgas getrocknet und gekühlt werden, welches in einem Trocknungs- und Kühlschritt während des Regenerationsbetriebes durch die in einem vorausgegangenen Desorptionsschritt erwärmten und befeuchteten Adsorber geleitet wird. Der Einsatz des erfindungsgemäßen Verfahrens eignet sich damit besonders für (Tief-)Druckereien, bei denen das erfindungsgemäß anfallende Kühlmedium, bspw. Kaltwasser, direkt benötigt wird.

Die der Erfindung zugrundeliegende Aufgabe wird weiter mit einer Anlage zur Kaltwassererzeugung unter Nutzung von Desorbatwärme gelöst, die einen Desorbatwärmetauscher aufweist, der über einen ersten Kreislauf eines ersten Heiz- oder Kühlmediums mit einem Pufferbehälter verbunden ist, aus welchem über einen zweiten Kreislauf mittels eines zweiten Heiz- oder Kühlmediums Wärmeenergie zur Nutzung abgeführt wird, wobei in dem zweiten Kreislauf ein Temperaturgleichrichter und diesem nachgeschaltet eine Kaltwassererzeugungsanlage vorgesehen sind, welche in Strömungsrichtung vor einem Wärmetauscher oder dgl. zur weiteren Nutzung der Wärmeenergie, insbesondere zum Heizen von Räumen, in dem zweiten Kreislauf angeordnet sind. Erst durch die erfindungsgemäße Zwischenschaltung eines Temperaturgleichrichters, welcher das dem Pufferbehälter kontinuierlich entnommene zweite Heiz- oder Kühlmedium auf ein gleichbleibendes Temperaturniveau bringt, ist der Betrieb einer Kaltwassererzeugungsanlage mit gutem Wirkungsgrad und damit wirtschaftlich möglich.

Der Temperaturgleichrichter ist dabei vorzugsweise ein mit Frischdampf betriebener Wärmetauscher, in welchem das Heiz- oder Kühlmedium des zweiten Kreislaufs kontinuierlich auf ein im Wesentlichen konstantes Temperaturniveau zwischen 85 °C und 110 °C, insbesondere auf etwa 95 °C, gebracht wird.

Wenn der Temperaturgleichrichter mit einer Dampfquelle verbunden ist, aus welcher gleichzeitig Dampf zur Regenerierung durch wenigstens einen Aktivkohlefilter (Adsorber) geleitet wird, der mit in dem Aktivkohlefilter adsorbierten Lösemitteln das durch den Desorbatwärmetauscher geleitete Desorbat bildet, kann eine separate Dampfquelle für den Temperaturgleichrichter entfallen. Den Adsorbern kann zusätzlich zu dem Desorbatwärmetauscher eine weitere Kühlstufe nachgeschaltet sein, welche mit dem in der Kaltwassererzeugungsanlage gekühlten Kühlmedium betrieben wird.

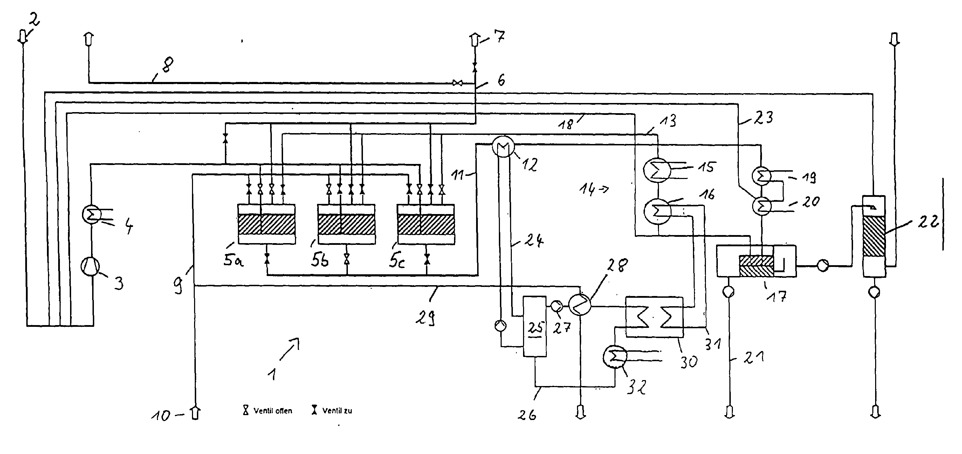

Im Folgenden wird die Erfindung anhand eines Ausführungsbeispiels und unter Bezugnahme auf die beigefügte Zeichnung erläutert. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbeziehung.

Die einzige Figur zeigt in schematischer Darstellung ein Verfahrensfließbild einer erfindungsgemäßen Abluftreinigungsanlage.

Die in der Figur dargestellte Abluftreinigungsanlage 1 weist eine Abluftansaugung 2 auf, bei der mit Lösemittel beladene Abgase, die bspw. in Tiefdruckereien anfallen, abgesaugt und durch ein Gebläse 3 verdichtet werden. In einem dem Gebläse 3 nachgeschalteten Kühler 4 können die Abgase abgekühlt werden. Dem Gebläse 3 sind mehrere Aktivkohle enthaltende Adsorber 5a, 5b und 5c parallel nachgeschaltet. Der Adsorber 5a arbeitet in der Darstellung der Figur im Adsorptionsbetrieb, in welchem die Lösemittel aus dem Abluftstrom adsorbiert werden. Der derart gereinigte Abgasstrom kann über eine Leitung 6 einem Abluftkamin 7 zugeführt werden, aus welchem die gereinigte Luft in die Atmosphäre abgelassen wird, oder über eine Leitung 8 bspw. in die Einhausung einer Druckmaschine zurückgeführt werden. Der Adsorber 5a wird durch die Adsorption der Lösemittel beladen, so dass nach einer bestimmten Betriebszeit eine Regeneration der Aktivkohle erforderlich ist.

Neben dem Aktivkohle-Adsorber 5a im Adsorptionsbetrieb sind in der Figur zwei weitere Aktivkohle-Adsorber 5b und 5c dargestellt, welche einem Regenerationsbetrieb unterzogen werden. Abweichend von der Darstellung in der Figur befinden sich üblicherweise ein oder mehrere Adsorber 5a im Adsorptionsbetrieb, während sich nur ein Adsorber in einem Desorptionsschritt (Adsorber 5b) oder in einem Trocknungs- und Kühlschritt (Adsorber 5c) des Regenerationsbetriebs befindet.

Im Desorptionsschritt wird über eine Leitung 9 Frischdampf aus einer Dampfquelle 10 durch den Adsorber 5b geleitet. Hierdurch wird die Aktivkohle erwärmt und es bildet sich ein Wasserdampf-Lösemittel-Gemisch (Desorbat), welches über eine Leitung 11 einer ersten Kühlstufe mit einem Wärmetauscher 12 (Desorbatwärmetauscher) zugeführt wird. In dem Desorbatwärmetauscher 12 wird dem Desorbat Wärmeenergie entzogen, so dass bspw. Wasser oder ein anderes geeignetes Heiz- oder Kühlmedium in dem Desorbatwärmetauscher 12 von 60 °C auf bis zu 95 °C erwärmt wird.

In dem sich an den Desorptionsschritt anschließenden Trocknungs- und Kühlschritt wird dem Adsorber 5c durch das Gebläse 3 ungereinigtes Abgas zugeleitet. Der durch den Desorptionsschritt erwärmte und mit Wasserdampf beladene Adsorber 5c wird dadurch gekühlt und getrocknet. Über eine Leitung 13 wird das in dem Adsorber 5c erwärmte und befeuchtete Abgas einer zweiten Kühlstufe 14 zugeleitet.

Die zweite Kühlstufe 14 weist einen ersten Ausschleuskühler 15, der bspw. mit Rückkühlwasser betrieben wird, und einen diesem nachgeschalteten, zweiten Ausschleuskühler 16 auf, der mit Kaltwasser betrieben wird. In der zweiten Kühlstufe 14 kondensiert ein Großteil der in dem Abgas enthaltenen Feuchtigkeit und wird einem Abscheider 17 zugeleitet. Das derart getrocknete und gekühlte Abgase wird über eine Leitung 18 vor dem Gebläse 3 mit dem Hauptabgasstrom aus der Abluftansaugung 2 gemischt und durch den oder die Adsorber 5a im Adsorptionsbetrieb geleitet.

Das in der ersten Kühlstufe 12 (Desorbatwärmetauscher) abgekühlte Desorbat wird einem Kondensator 19 und einem Nachkühler 20 zugeleitet, welcher ebenfalls mit dem Abscheider 17 verbunden ist. In dem Abscheider 17 wird Lösemittel in der flüssigen Phase abgeschieden und kann über eine Leitung 21 abgelassen werden. Das Wasserdampfkondensat wird aus dem Abscheider 17 einem Stripper 22 zur weiteren Reinigung zugeleitet. Der Kondensator 19 und der Nachkühler 20 wird über eine Atmungsleitung 23 mit der Saugseite des Gebläses 3 verbunden.

Der Desorbatwärmetauscher 12 ist über einen ersten Kreislauf (Primärkreislauf) 24 mit einem Pufferbehälter 25 verbunden, welchem diskontinuierlich, d.h. immer wenn ein Aktivkohle-Adsorber 5b im Desorptionsschritt regeneriert wird, ein Heiz- oder Kühlmedium zugeleitet wird.

In dem Pufferbehälter 25 wird die Wärmeenergie gespeichert und kontinuierlich über einen zweiten Kreislauf (Sekundärkreislauf) 26, ggf. mittels einer Pumpe 27, einem Temperaturgleichrichter 28 zugeführt. Dieser Temperaturgleichrichter 28 ist ein Wärmetauscher, in welchem über eine Leitung 29 Frischdampf aus der Dampfquelle 10 eingebracht wird, so dass das in dem zweiten Kreislauf 26 zirkulierende Heiz- oder Kühlmedium, bspw. Wasser, kontinuierlich auf ein gleichbleibendes Temperaturniveau von bspw. etwa 95 °C angehoben wird. Nach dem Temperaturgleichrichter 28 wird dieses Heiz- oder Kühlmedium durch einen Kaltwassererzeuger 30 geleitet, welcher als Kältemaschine mittels der Wärmeenergie des in dem zweiten Kreislauf 26 zirkulierenden Heiz- oder Kühlmediums in einem Kaltwasserkreislauf 31 ein Kühlmedium, wie bspw. Wasser, abkühlt.

Aus dem Kaltwassererzeuger wird das um etwa 10 °C auf bspw. 85 °C abgekühlte Heiz- oder Kühlmedium in dem zweiten Kreislauf 26 durch einen Wärmetauscher 32 zurück in den Pufferbehälter 25 geleitet. Der Wärmetauscher 32 dient dabei der Abwärmenutzung der in dem Heiz- oder Kühlmedium enthaltenen Wärmeenergie. Diese Wärmeenergie kann bspw. zum Heizen von Räumen, Gebäuden oder dgl. genutzt werden.

Der Kaltwassererzeuger 30 ist über den Kreislauf 31 mit dem zweiten Ausschleuskühler 16 der zweiten Kühlstufe 14 verbunden. Das in dem Kaltwassererzeuger 30 bspw. von 12 °C auf etwa 6 °C abgekühlte Wasser wird somit unmittelbar für die Kühlung des Abgases eines Adsorbers 5c im Trocknungs- und Kühlschritt eingesetzt. Auf diese Weise lässt sich die im Desorbat enthaltene Wärme besonders wirtschaftlich nutzen. Gleichzeitig wird den Adsorbern im Regenerationsbetrieb nach dem Desorptionsschritt in dem Trocknungs- und Kühlschritt Feuchtigkeit entzogen und die Adsorber werden abgekühlt. Es ist daher nicht erforderlich, die zur Trocknung bzw. Kühlung eingesetzten Abgase bspw. über den Kamin 7 in die Umgebung abzulassen, sondern diese können nach einer Reinigung in einem Adsorber 5a im Adsorptionsbetrieb gereinigt in die Einhausung einer Druckmaschiene oder dgl. zurückgeleitet werden.

Erst durch den Einsatz des Temperaturgleichrichters 28 wird ein wirtschaftlicher Betrieb der Kaltwassererzeugungsanlage 30 ermöglicht, da ohne die Zufuhr von zusätzlicher Wärmeenergie mittels Frischdampf aus der Leitung 29 das in dem zweiten Kreislauf 26 zirkulierende Heiz- oder Kühlmedium nicht kontinuierlich auf einem gleichbleibend hohem Temperaturniveau von etwa 95 °C gehalten werden kann. Dies ist durch die diskontinuierlichen Desorptionsschritte in den Regenerationsphasen der Adsorber bedingt, so dass in dem Desorbatwärmetauscher 12 nicht kontinuierlich Wärmeenergie an den ersten Kreislauf 24 und damit an den Puffer 25 abgeführt werden kann.

Das in der Kaltwassererzeugungsanlage 30 abgekühlte Kühlmedium kann ggf. auch zu anderen Kühlzwecken in der Anlage eingesetzt werden. Durch die Nutzung der in dem Desorbat enthaltenen Wärmeenergie zur Kaltwassererzeugung können die Betriebskosten um etwa 50% gesenkt werden. Da für den Temperaturgleichrichter 28 Frischdampf eingesetzt wird, welcher in der Abluftreinigungsanlage 1 bereits für die Regenerierung der Aktivkohle-Adsorber 5a, 5b und 5c vorzuhalten ist, sind die zusätzlichen Investitionskosten für die Anlage zur Kaltwassererzeugung gering.

### Bezugszeichen:

- 1: Rückgewinnungsanlage
- 2: Abluftansaugung
- 3: Gebläse
- 4: Kühler
- 5a - 5c: Aktivkohle-Adsorber
- 6: Leitung
- 7: Kamin
- 8: Leitung
- 9: Leitung
- 10: Dampfquelle
- 11: Leitung
- 12: erste Kühlstufe (Desorbatwärmetauscher)
- 13: Leitung
- 14: zweite Kühlstufe
- 15: erster Ausschleuskühler
- 16: zweiter Ausschleuskühler
- 17: Abscheider
- 18: Leitung
- 19: Kondensator
- 20: Nachkühler
- 21: Leitung
- 22: Stripper
- 23: Leitung
- 24: erster Kreislauf
- 25: Pufferbehälter
- 26: zweiter Kreislauf
- 27: Pumpe
- 28: Temperaturgleichrichter
- 29: Leitung
- 30: Kaltwassererzeugung
- 31: Kaltwasserkreislauf
- 32: Wärmetauscher

## Patentansprüche

1. Verfahren zur Kaltwassererzeugung unter Nutzung von Desorbatwärme, insbesondere aus einer Lösemittelrückgewinnungsanlage (1), bei dem in einem Desorbatwärmetauscher (12) ein Heiz- oder Kühlmedium erwärmt und dessen Wärmeenergie in einem Puffersystem (25) gespeichert wird, aus welchem mittels eines weiteren Heiz- oder Kühlmediums Wärmeenergie zur Nutzung abgeführt wird, **dadurch gekennzeichnet, dass** das weitere Heiz- oder Kühlmedium vor dieser Nutzung der Wärmeenergie in einem Temperaturgleichrichter (28) auf ein im Wesentlichen konstantes Temperaturniveau zwischen 85 °C und 110 °C gebracht und die Wärmeenergie des Heiz- oder Kühlmediums in einer dem Temperaturgleichrichter (28) nachgeschalteten Kaltwassererzeugungsanlage (30) zur Kühlung eines Kühlmediums eingesetzt wird.

2. Verfahren nach Anspruch 1, **dadurch gekennzeichnet, dass** das weitere Heiz- oder Kühlmedium in dem Temperaturgleichrichter (28) auf ein im Wesentlichen konstantes Temperaturniveau von etwa 95 °C gebracht wird.

3. Verfahren nach Anspruch 1 oder 2, **dadurch gekennzeichnet, dass** das weitere Heiz- oder Kühlmedium die dem Temperaturgleichrichter (28) nachgeschaltete Kaltwassererzeugungsanlage (30) mit einem Temperaturniveau zwischen 75 °C und 95 °C, insbesondere etwa 85 °C, verlässt.

4. Verfahren nach einem der vorhergehenden Ansprüche, **dadurch gekennzeichnet, dass** dem Temperaturgleichrichter (28) Frischdampf zugeführt wird, der insbesondere in einer Dampfquelle (10) erzeugt wird, welche gleichzeitig den Frischdampf zur Erzeugung des Desorbats während des Regenerierens von wenigstens einem Adsorber (5a, 5b, 5c) bildet.

5. Verfahren nach einem der vorhergehenden Ansprüche, **dadurch gekennzeichnet, dass** in der dem Temperaturgleichrichter (28) nachgeschalteten Kaltwassererzeugungsanlage (30) das Kühlmedium auf eine Temperatur unter 15 °C, insbesondere auf etwa 4 °C bis 7 °C abgekühlt wird.

6. Verfahren nach einem der vorhergehenden Ansprüche, **dadurch gekennzeichnet, dass** das erste Heiz- oder Kühlmedium aus dem Desorbatwärmetauscher (12) diskontinuierlich dem Puffersystem (25) zugeführt wird, aus welchem die Wärmeenergie mittels des weiteren Heiz- oder Kühlmediums kontinuierlich zur Nutzung abgeführt wird.

7. Verfahren nach einem der vorhergehenden Ansprüche, **dadurch gekennzeichnet, dass** das in der Kaltwassererzeugungsanlage (30) abgekühlte Kühlmedium über einen Kühlkreislauf (31) einer Kühlstufe (14) zugeführt wird, welche den Adsorbern (5a, 5b, 5c) nachgeschaltet ist.

8. Verfahren nach Anspruch 7, **dadurch gekennzeichnet, dass** in der Kühlstufe (14) Abgas getrocknet und gekühlt wird, welches in einem Trocknungsund Kühlschritt während des Regenerationsbetriebes durch die in einem vorausgegangenen Desorptionsschritt erwärmten und befeuchteten Adsorber (5a, 5b, 5c) geleitet wird.

9. Anlage zur Kaltwassererzeugung unter Nutzung von Desorbatwärme, insbesondere zur Durchführung eines Verfahrens nach einem der vorhergehenden Ansprüche, mit einem Desorbatwärmetauscher (12), der über einen ersten Kreislauf (24) eines ersten Heiz- oder Kühlmediums mit einem Pufferbehälter (25) verbunden ist, aus welchem über einen zweiten Kreislauf (26) mittels eines zweiten Heiz- oder Kühlmediums Wärmeenergie zur Nutzung abgeführt wird, **dadurch gekennzeichnet, dass** in dem zweiten Kreislauf (26) ein Temperaturgleichrichter (28) und diesem nachgeschaltet eine Kaltwassererzeugungsanlage (30) vorgesehen sind, welche in Strömungsrichtung vor einem Wärmetauscher (32) oder dgl. zur weiteren Nutzung der Wärmeenergie, insbesondere zum Heizen von Räumen, in dem zweiten Kreislauf (26) angeordnet sind.

10. Anlage nach Anspruch 9, **dadurch gekennzeichnet, dass** der Temperaturgleichrichter (28) ein mit Dampf betriebener Wärmetauscher ist, in welchem das Heiz- oder Kühlmedium des zweiten Kreislaufs (26) auf ein im Wesentlichen konstantes Temperaturniveau zwischen 85 °C und 110 °C gebracht wird.

11. Anlage nach Anspruch 10, **dadurch gekennzeichnet, dass** der Temperaturgleichrichter (28) mit einer Dampfquelle (10) verbunden ist, aus welcher gleichzeitig Dampf zur Regenerierung durch wenigstens einen Aktivkohle-Adsorber (5a, 5b, 5c) geleitet wird, der mit in dem Aktivkohle-Adsorber (5a, 5b, 5c) adsorbierten Lösemitteln das durch den Desorbatwärmetauscher (12) geleitete Desorbat bildet.

12. Anlage nach einem der Ansprüche 9 bis 11, **dadurch gekennzeichnet, dass** dem Desorbatwärmetauscher (12) ein Kondensator (19) und/oder ein Nachkühler (20) nachgeschaltet ist.

13. Anlage nach einem der Ansprüche 9 bis 12, **dadurch gekennzeichnet, dass** der Desorbatwärmetauscher (12) in eine Lösemittelrückgewinnungs-Anlage z. B. in einer Druckerei integriert ist, in welcher das in der Kaltwassererzeugungsanlage (30) abgekühlte Kühlmedium für Kühlzwecke eingesetzt wird.

14. Anlage nach einem der Ansprüche 9 bis 13, **dadurch gekennzeichnet, dass** den Aktivkohle-Adsorbern (5a, 5b, 5c) zusätzlich zu dem Desorbatwärmetauscher (12) eine weitere Kühlstufe (14) nachgeschaltet ist, welche mit dem in der Kaltwassererzeugungsanlage (30) gekühlten Kühlmedium betrieben wird.
